Europäisches Patentamt

**European Patent Office**

Office européen des brevets

(11) Numéro de publication: **0 280 369 B1**

(12) FASCICULE DE BREVET EUROPEEN

(19)

(45) Date de publication de fascicule du brevet: **14.07.93** (51) Int. Cl.⁵: **G06F 13/18**

(21) Numéro de dépôt: **88200302.3**

(22) Date de dépôt: **19.02.88**

(54) **Dispositif pour permettre à deux processeurs de traitement de signal l'accès à un circuit commun.**

(30) Priorité: **27.02.87 FR 8702659**

(43) Date de publication de la demande:
**31.08.88 Bulletin 88/35**

(45) Mention de la délivrance du brevet:
**14.07.93 Bulletin 93/28**

(84) Etats contractants désignés:
**DE FR GB IT SE**

(56) Documents cités:
**EP-A- 0 024 288**
**WO-A-86/04434**

(73) Titulaire: **PHILIPS ELECTRONIOUE GRAND PU-
BLIC
51, Rue Carnot
F-92150 Suresnes(FR)**

(84) Etats contractants désignés:
**FR**

(73) Titulaire: **N.V. Philips' Gloeilampenfabrieken
Groenewoudseweg 1
NL-5621 BA Eindhoven(NL)**

(84) Etats contractants désignés:
**DE GB IT SE**

(72) Inventeur: **Bussonnière, André Société Civile
S.P.I.D.
209, rue de l'Université
F-75007 Paris(FR)**
Inventeur: **Courtois, Yves Société Civile
S.P.I.D.
209, rue de l'Université
F-75007 Paris(FR)**

(74) Mandataire: **Chaffraix, Jean et al
Société Civile S.P.I.D. 156, Boulevard Haussmann
F-75008 Paris (FR)**

EP 0 280 369 B1

## Description

La présente invention concerne un dispositif de traitement de données comportant un premier processeur de traitement de signal qui est dit prioritaire et qui opère selon des cycles de fonctionnement rapides, un second processeur de traitement de signal opérant selon des cycles de fonctionnement lents et un circuit commun ayant au moins une fonction de mémoire et étant relié au premier et second processeur par l'intermédiaire d'un circuit d'aiguillage commandé par un signal d'aiguillage issu d'un organe de commande, cet organe de commande portant le signal d'aiguillage, soit à un premier niveau pour mettre en relation le circuit commun avec le premier processeur, soit à un second niveau pour mettre en relation le circuit commun avec le second processeur, en fonction d'un signal de préparation engendré par le premier processeur.

De tels dispositifs sont bien connus. On pourra à ce sujet consulter notamment la demande de brevet WO 86/04434. Dans cette référence, on décrit un dispositif où le circuit commun est une mémoire susceptible d'être adressée par deux systèmes de traitement d'informations. Ces systèmes sont constitués de façon usuelle à partir de microprocesseurs. Le dispositif décrit dans la demande de brevet précitée permet d'éviter des conflits dûs à une demande simultanée des deux microprocesseurs concernant cette mémoire commune.

Ce dispositif connu présente l'inconvénient que le second processeur, qui n'a pas la priorité, doit interroger un circuit de contrôle pour pouvoir avoir accès au circuit commun. Cette interrogation implique des instructions d'interrogation supplémentaires pour chaque accès au circuit commun, ce qui peut amener un ralentissement du second processeur.

La présente invention propose un dispositif de ce genre qui ne présente pas l'inconvénient précité et qui, tout en satisfaisant l'exigence de priorité du premier processeur, ne pénalise pratiquement pas le fonctionnement du second processeur.

Pour cela un tel dispositif est remarquable en ce que l'organe de commande est pourvu pour porter le signal d'aiguillage à son premier niveau après réception du signal de préparation et maintenir le signal d'aiguillage à son premier niveau durant le cycle de fonctionnement qui suit immédiatement après le cycle durant lequel le signal de préparation a été engendré.

En maintenant le signal d'aiguillage à son premier niveau durant ce cycle suivant immédiatement celui où le signal de préparation a été engendré l'on obtient que l'accès au circuit commun est assuré durant cedit cycle suivant immédiatement.

Une forme préférentielle du dispositif selon l'invention est caractérisé en ce que l'organe de commande est pourvu pour retarder un accès au circuit commun, requis par le second processeur, au cycle de fonctionnement suivant celui pendant lequel le signal d'aiguillage était à son premier niveau, lorsque durant un même cycle de fonctionnement il y a eu un signal de préparation et un appel d'accès de la part du second processeur qui ont été présentés à l'organe de commande. Ainsi un accès régulier pour le second processeur est assuré.

Une autre forme préférentielle du dispositif selon l'invention est caractérisée en ce qu'il est prévu un ensemble de registres et d'amplificateurs à trois états pour prendre en charge des données provenant du circuit commun et pour les restituer au second processeur pendant que le signal d'aiguillage se trouve à son premier niveau.

L'invention s'applique également à un organe de commande prévu pour former le signal d'aiguillage.

La description suivante accompagnée des dessins annexés, le tout donné à titre d'exemple non limitatif fera bien comprendre comment l'invention peut être réalisée.

La figure 1 représente un schéma du dispositif conforme à l'invention.

La figure 2 représente un schéma de l'organe de commande.

La figure 3 représente un diagramme-temps destiné à expliquer le fonctionnement du dispositif de l'invention dans le cas où il n'y a pas de conflit.

La figure 4 représente un diagramme-temps destiné à expliquer le fonctionnement du dispositif dans un premier cas de conflit.

La figure 5 représente un diagramme-temps destiné à expliquer le fonctionnement du dispositif dans un deuxième cas de conflit.

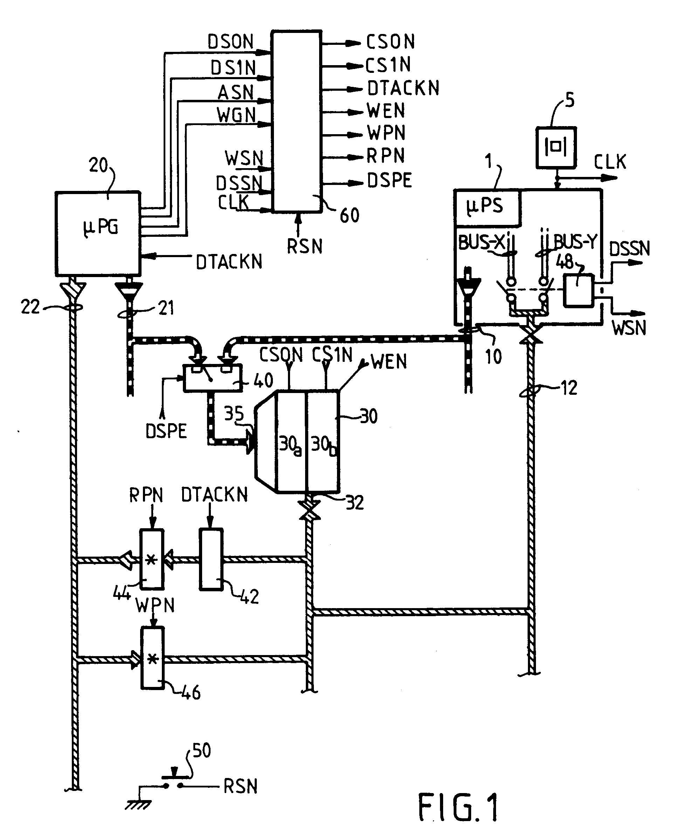

La figure 1 illustre un exemple d'un dispositif de traitement de données selon l'invention. Dans cette figure 1, la référence 1 indique un microprocesseur de traitement de signal faisant partie d'un système de traitement de signal prioritaire. Ce microprocesseur, dans le cadre de l'exemple décrit, est celui fabriqué par PHILIPS sous l'immatriculation PCB 5010. Ce microprocesseur fonctionne en cycles rapides dont le rythme d'apparition est fixé par des signaux CLK fournis par une horloge 5. Ce microprocesseur 1 fournit des codes d'adresses sur une ligne commune 10 et peut recevoir ou émettre des données sur une ligne commune 12. De ce microprocesseur 1, on considère les signaux DSSN et WSN qui correspondent au signaux DSN et WN (la lettre N indiquant la valeur inverse du signal) et qui sont utilisés pour signaler respectivement que la ligne 12 est reliée à l'une des lignes internes communes du microprocessuer (ligne X et ligne Y indiquées dans les spécifications du microprocesseur envisagé) et que les données véhiculées par la ligne 12 doivent être écrites ou lues à l'extérieur.

La référence 20 à la figure 1 indique le microprocesseur (par exemple le 68000) faisant partie du second système de traitement d'informations. Ce microprocesseur qui ne jouit pas d'une priorité par rapport au microprocesseur 1 émet sur une ligne commune 21 des codes d'adresses. Une ligne 22 commune de transmission de données est utilisée pour l'échange d'informations entre le microprocesseur 20 et son environnement. Ce microprocesseur engendre aussi différents signaux notamment les signaux DS0N et DS1N qui indiquent la partie des données à prendre en considération et signifient de fait la taille des données. En effet, le microprocesseur utilisé dans cet exemple accepte des mots de 8 éléments binaires ou des mots de 16 éléments binaires. Il fournit aussi les signaux ASN pour indiquer la validation d'un code d'adresse présent sur la ligne 22 et les signaux WGN pour indiquer que les données véhiculées par la ligne 21 doivent être lues ou inscrites. La lecture ou l'inscription se termine par un signal DTACKN provenant d'un organe de commande 60.

Un circuit commun est constitué d'une mémoire 30. Cette mémoire est organisée en deux blocs 30a et 30b correspondant à la taille des mots traitées par le microprocesseur 20, chacun de ces blocs étant sélectionné au moyen de signaux CS0N et CS1N. Un signal WEN en provenance de l'organe de commande doit être appliqué à la mémoire 30 pour commander un transfert de données présentes à son accès de données 32. La mémoire est aussi pourvue d'une entrée 35 pour recevoir des codes d'adresses.

Pour aiguiller cette mémoire 30 sur l'un des microprocesseurs 1 ou 20 on utilise tout d'abord un circuit d'aiguillage de code d'adresses 40 de sorte que l'entrée 35 peut être connectée à la ligne 10 du microprocesseur 1 ou à la ligne 21 du microprocesseur 20 en fonction d'un signal d'aiguillage DSPE produit par l'organe de commande. Pour la lecture des données emmagasinées dans la mémoire 30 par le microprocesseur 20 on a prévu une succession de composants formée d'un registre 42 et d'un banc d'amplificateurs à trois états 44 qui interconnecte l'accès de données 32 à la ligne 22. La commande d'enregistrement du registre 42 reçoit le signal DTACKN et la commande à l'état passant du banc d'amplificateurs un signal RPN.

Pour l'écriture des données provenant du microprocesseur 20 dans la mémoire 30 on utilise un banc d'amplificateurs à trois états 46 interconnectant la ligne 22 avec l'accès de données 32. La commande à l'état passant de ce banc reçoit un signal WPN.

La connexion de l'accès 32 avec la ligne de données BUSX et BUSY internes au microprocesseur 1 s'effectue aussi à l'intérieur de ce microprocesseur sous la commande de l'organe 48 destiné à gérer sous la commande du programme de fonctionnement du microprocesseur l'accès de ces bus X et Y à la ligne de données externes 12.

Un circuit de remise à zéro 50, que l'on a représenté sur la figure sous la forme d'un bouton-poussoir, fournit un signal de remise à zéro RSN à l'organe de commande 60.

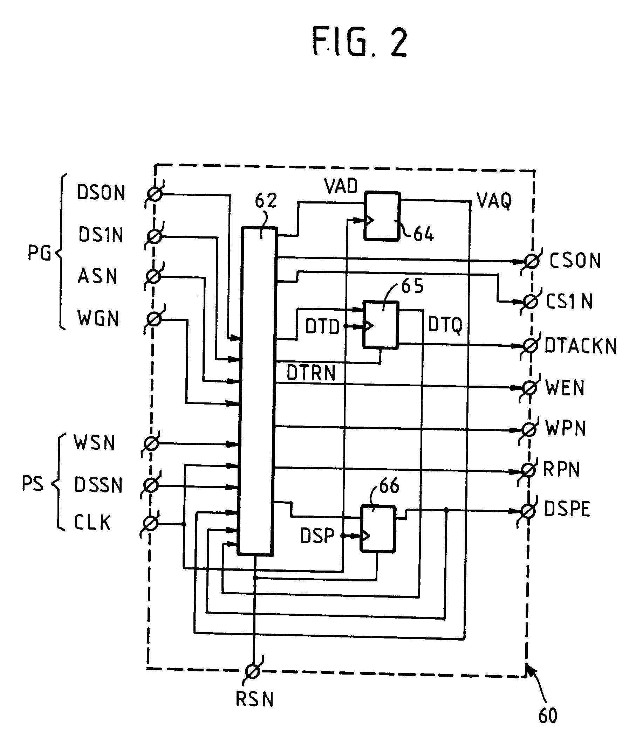

Un exemple d'un organe de commande 60 est montré plus détail à la figure 2. Cet organe de commande fournit les différents signaux CS0N, CS1N, DTACKN, WEN, WPN, RPN et DSPE à partir des signaux DS0N, DS1N, ASN, WGN, WSN, DSSN, CLK et RSN.

Cet organe est composé d'un circuit logique combinatoire 62 et de trois bascules 64, 65 et 66 de type D. Toutes ces bascules reçoivent le signal CLK à leur entrée d'horloge. La bascule 64 fournit à sa sortie Q le signal VAQ alors qu'elle reçoit à son entrée D le signal VAD. La bascule 65 fournit à sa sortie Q le signal DTQ ($=$DTACK), reçoit à son entrée D un signal DTD et à son entrée d'initialisation un signal DTRN. La bascule 66 fournit à sa sortie Q le signal DSPE et reçoit à son entrée D un signal DSP et à son entrée d'initialisation le signal RSN.

Le circuit combinatoire 62 recevant les signaux DS0N, DS1N, ASN, WGN, WSN, DSSN, CLK, RSN, VAQ, DTQ et DSPE, et fournit les signaux VAD, CS0N, CS1N, DTD, DTRN, WEN, WPN, RPN et DSP en effectuant les opérations suivantes:

(1) VAD $=$ /ASN.(/DS0N$+$/DS1N).RSN.(/VAQ$+$DSPE)

(2) CS0N $=$ DS0N./DSPE

(3) CS1N $=$ DS1N./DSPE

(4) DTD $=$ /VAD.VAQ./ASN(/DS0N$+$/DS1N).RSN$+$DTD./ASN.RSN

(5) DTRN $=$ /ASN

(6) WEN $=$ (WSN$+$/DSPE). (DSPE$+$/DTD$+$DTQ$+$ASN$+$DS0N.DS1N$+$WGN)

(7) WPN $=$ DSPE$+$ASN$+$/DTD$+$DTQ$+$WGN$+$DS0N.DS1N

(8) RPN $=$ /WGN$+$ASN$+$DS0N.DS1N

(9) DSP = /DSPE./DSSN.RSN

On notera la relation DTACKN = /DTQ.

Pour écrire ces différentes formules, on a utilisé le formalisme suivant:

/: complément du signal qui suit,

.: opération ET logique,

+ : opération OU logique,

Les tableaux I et II ci-dessous donnent la signification des différents signaux.

TABLEAU I

| Signal logique | Valeur active | Commentaires |
|---|---|---|
| 1) SIGNEAUX PROVENANT DU PROCESSEUR µP G20 | | |
| DSON | 0 | Pour sélectionner 8 bits de poids faible présents sur la ligne 22. |
| DS1N | 0 | Pour sélectioner 8 bits de poids fort présents sur la ligne 22. |
| ASN | 0 | Pour indiquer que la.mémoire 30 est sollicitée. |
| WGN | 0 | Pour indiquer qu'une inscription dans la mémoire 30 est requise. |
| 2) SIGNEAUX PROVENANT DU PROCESSEUR µP S1 | | |
| WSN | 0 | Pour indiques qu'une inscription dans la mémoire 30 est requise. |
| DSSN | 0 | Pour d'une part faire office de signal de préparation et pour d'autre part indiquer qu'une inscription de lecture ou d'écriture dans la mémoire 30 est requise. |
| 3) SIGNAL RSN | | |
| RSN | 0 | Met les bascules 64, 65 et 66 à zéro au front montant suivant du signal CLK. |
| 4) SIGNAL CLK | | |
| CLK | | Le front montant des signaux règle le cadencement du fonctionnement du dispositif. |

5

TABLEAU II

| SIGNAUX FOURNIS PAR L'ORGANE DE COMMANDE 60 | | |
|---|---|---|
| Signal logique | Valeur active | Commentaires |
| CSON | 0 | Pour sélectionner le bloc 30a de la mémoire 30. |
| CS1N | 0 | Pour sélectionner le bloc 30b de la mémoire 30. |
| DTACKN | 0 | a) Pour indiquer au processeur PG20 qu'une inscription ou lecture concernant la mémoire 30 a ét exécutée. |
| | 1 | b) Pour rendre transparent le registre 42. |
| WEN | 0 | Pour mettre la mémoire 30 en position d'écriture. |
| WPN | 0 | Pour mettre l'ensemble 46 à l'état passant. |
| RPN | 0 | Pour mettre l'ensemble 44 à l'état passant |
| DSPE | 1 | a) Pour connecter l'entrée 35 sur la ligne 10. (premier niveau) |
| | 0 | b) Pour connecter l'entrée 35 sur la ligne 21. (second niveau) |

Il est possible maintenant d'expliquer le fonctionnement du dispositif selon l'invention. On explique tout d'abord comment s'effectuent une lecture et une écriture de la mémoire 30 lorsque ces opérations sont requises par le processeur PG20, donc lorsqu'un signal ASN = 0 a été produit par ce dernier.

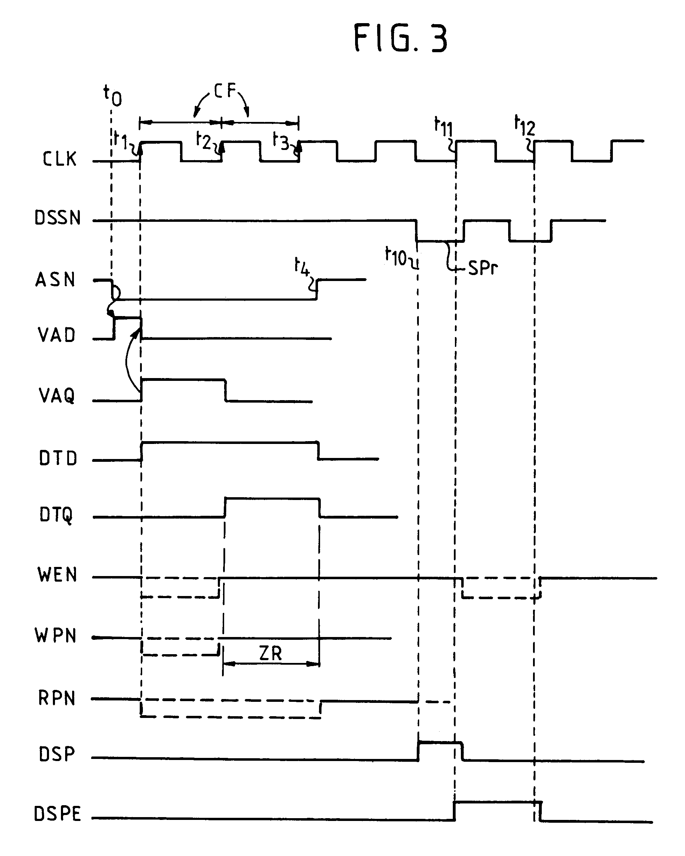

On se reporte à la figure 3 où l'on considère l'instant t0; c'est à cet instant que le signal ASN devient actif (ASN = 0) et l'on admet que DS0N ou DS1N le devienne aussi. Avant cet instant, les bascules sont considérées être à zéro, c'est-à-dire que: VAQ = 0, DTQ = 0 et DSPE = 0, ce qui entraîne VAD = 0. Dès que ASN a la valeur "0" VAD prend la valeur "1". Puis survient, à l'instant t1, un front montant du signal CLK. On rappelle que chacun de ces fronts définit un cycle de fonctionnement CF. A cet instant t1, comme le signal VAD est égal à 1, le signal VAQ prend cette valeur "1", ce qui entraîne que DTD = 1 et que VAD = 0. A l'instant t2 survient le front suivant du signal CLK, ce qui fait que VAQ prend la valeur de VAD et DTQ devient égal à "1". A l'instant t3 où survient le front montant du signal CLK, les valeurs des signaux restent inchangées. Puis, enfin, à l'instant t4 le signal ASN prend la valeur "1", ce qui remet à zéro la bascule 65, donc DTQ revient à "0" et l'on se retrouve à l'état décrit antérieurement à t0.

EP 0 280 369 B1

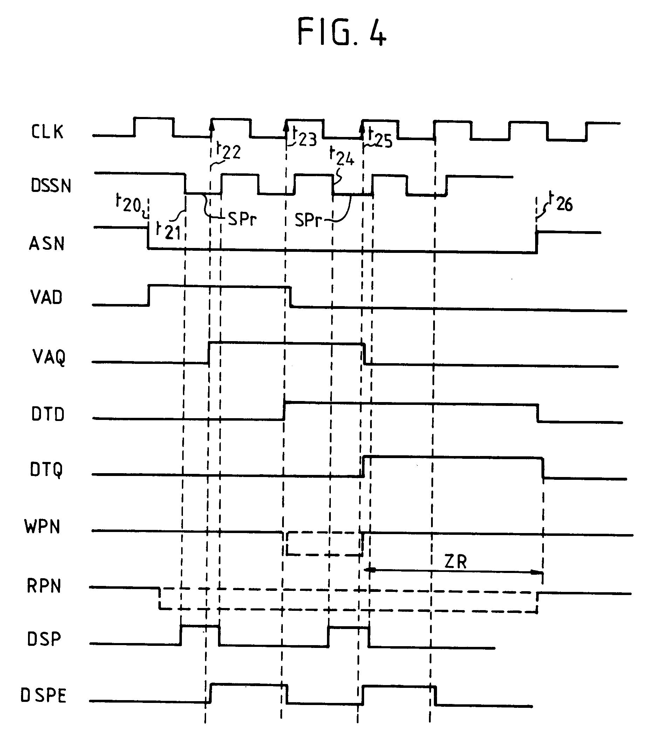

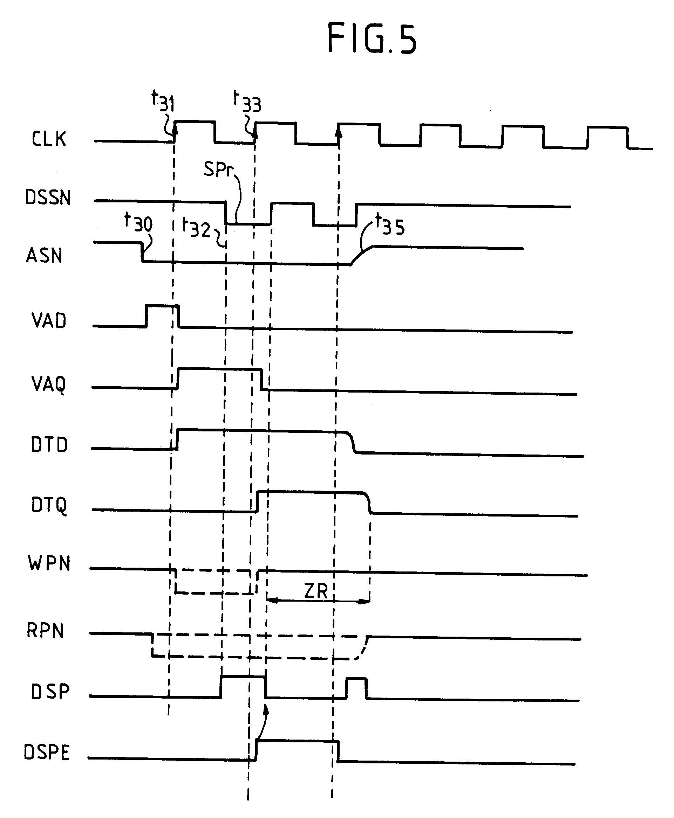

Une donnée provenant du microprocesseur 20 est écrite (WGN = 0) pendant le temps où VAQ = 1 (entre t1 et t2) c'est-à-dire juste avant que le signal DTQ (ou DTACKN) devienne actif, signalant ainsi que l'écriture a été effectuée. En lecture (WGN = 1) le signal RPN est actif, pratiquement tant que le signal ASN l'est, ce qui est sans inconvénient car les données issues de la mémoire 30 sont mémorisées pendant le temps où le signal DTQ (DTACKN) est actif et c'est pendant ce laps de temps, repéré par ZR à cette figure 3 (et aussi aux figures 4 et 5) que la donnée à la sortie de l'ensemble 44 sera considérée par le processeur 20.

On explique ci-dessous comment s'effectuent une lecture et une écriture de la mémoire 30 lorsque ceci est requis par le processeur 1.

On se place à l'instant t10 où le signal DSSN prend la valeur "0" constituant ainsi le signal préparatoire indiqué par SPr. Il est supposé, conformément aux spécifications du processeur de signal envisagé, que ceci ne peut survenir que lorsque le signal CLK a la valeur "0". La valeur "0" de DSSN entraîne que le signal DSP prend la valeur "1", de sorte qu'à l'instant t11 où surgit un front montant de CLK, la bascule 66 commute et DSPE prend la valeur "1" commutant ainsi la mémoire 30 sur le processeur 1 de sorte que pendant le cycle de fonctionnement CF situé entre t11 et t12 (instants où apparaissent des front montants du signal CLK) le processeur doit effectuer une opération sur la mémoire 30. Le passage de DSSN à "1", après l'instant t11 entraîne DSP = 0 puisque DSPE = 1 maintenant, ainsi aussi lorsque DSSN reprend la valeur "0", avant t12, le fait que DSPE = 1 empêche DSP de reprendre la valeur "1". Après l'instant t12 le signal DSPE reprend la valeur "0", puisque DSP est toujours à "0".

A la figure 4 on examine le cas où les microprocesseurs 1 et 20 demandent, dans des laps des temps communs, l'accès à la mémoire 30 et l'on examine plus particulièrement le cas où le signal ASN devient actif (à l'instant t20), avant que n'apparaisse le signal préparatoire DSSN (à l'instant t21). Le fait que le signal ASN devienne actif provoque le passage à "1" du signal VAD. Le signal DSP prend la valeur "1" sous l'influence du signal DSSN = 0 surgissant à l'instant t21. Au front montant du signal CLK survenant à l'instant t22 d'une part, le signal VAQ va prendre le signal "1" et d'autre part, le signal DSPE va aussi prendre cette valeur pour mettre en relation la mémoire 30 avec le processeur 1. Entre les instants t22 et t23 (déterminés par des fronts montants de CLK) le signal DSPE va garder la valeur "1", ce qui fait que le signal VAD va garder aussi la valeur "1", ceci étant dû au terme (/VAQ + DSPE) de l'équation (1). A l'instant t23, le signal DSPE prend la valeur "0" de sorte que cette fois le signal VAD prend la valeur "0", le signal VAQ garde la valeur "1" puisque VAD a pris la valeur "0" après le front montant de t23, et le signal DTD prend la valeur "1" juste après le front montant de cet instant t23, suite à la valeur VAD = 0. Un accès à la mémoire 30 par le microprocesseur 20 est maintenant possible pendant le temps où VAQ reste égal à "1". Ainsi cet accès par le microprocesseur 20 est retardé jusqu'à ce que l'accès par le microprocesseur 1 soit terminé.

Puis survient un second signal préparatoire SPr à l'instant t24. On remarque que ce signal se produit pendant que le signal DSPE a la valeur "0", impliquant qui la mémoire 30 est en relation avec le microprocesseur 20 d'une manière qui sera expliquée un peu plus loin. Ce dernier créneau préparatoire SPr aura pour effet de faire mettre à "1" le signal DSPE à l'instant t25 correspondant à un front montant du signal CLK. MAis ce front montant de l'instant t25 provoque le passage à "1" du signal DTQ puisque DTD a toujours la valeur "1". Ce signal ne passera à "0" que lorsque le signal ASN prendra la valeur "1" (à l'instant t26), signifiant ainsi que les relations entre le microprocesseur 20 et la mémoire 30 sont terminées.

Ainsi, comme le signal DSPE a pris la valeur "1" entre d'une part les instants t22 et t23 et d'autre part après l'instant t25 pour une durée de cycle de fonctionnement, les relations entre le microprocesseur prioritaire 1 et la mémoire 30 ont été assurées. En ce qui concerne les relations du microprocesseur 20 et de la mémoire 30, il convient de noter que l'écriture de la mémoire 30, a pu avoir lieu pendant que le signal WPN avait la valeur "0", c'est-à-dire entre les instants t23 et t25, tandis que la lecture a pu avoir lieu pendant que le signal DTQ avait la valeur "1" et quelle que soit la valeur DSPE, ceci grâce aux registre et ensemble 42 et 44.

A la figure 5 on examine le cas où le signal ASSN prend la valeur "0" à l'instant t30 avant un front montant (à l'instant t31) suivi par un signal préparatoire SPr survenant à l'instant t32. Le processus se déroule de la manière déjà décrite relativement à la figure 3. Il convient de noter que lorsque le signal DSPE prend la valeur "1" à l'instant t33 mettant en relation le microprocesseur 1 avec la mémoire 30, le signal DTQ prend la valeur "1", ce qui permet au microprocesseur 20 de pouvoir lire les données par le truchement des ensemble et registre 42 et 44, l'écriture ayant eu lieu si demandée avant l'instant t33. A l'instant t35 le signal ASN prend la valeur "1", ce qui termine l'échange.

7

## EP 0 280 369 B1

**Revendications**

**1.** Dispositif de traitement de données comportant un premier processeur (1) de traitement d'informations qui est dit prioritaire et qui opère selon des cycles de fonctionnement rapides, un second processeur (20) de traitement d'informations opérant selon des cycles de fonctionnement lents et un circuit commun (30) ayant au moins une fonction de mémoire et étant relié au premier et second processeur par l'intermédiaire d'un circuit d'aiguillage (40) commandé par un signal d'aiguillage (DSPE) issu d'un organe de commande (60), cet organe de commande portant le signal d' aiguillage, soit à un premier niveau pour mettre en relation le circuit commun avec le premier processeur (1), soit à un second niveau pour mettre en relation le circuit commun avec le second processeur (20), en fonction d'un signal de préparation (DSSN) engendré par le premier processeur avant le cycle de fonctionnement rapide où l'accès est demandé, caractérisé en ce que l'organe de commande (60) est conçu pour porter le signal d'aiguillage (DSPE) à son premier niveau lors du cycle de fonctionnement suivant la réception du signal de préparation, pour le maintenir à ce niveau pendant une durée d'accès au plus égale à un cycle de fonctionnement rapide et pour le mettre au second niveau, au moins durant le cycle suivant.

**2.** Dispositif selon la revendication 1, caractérisé en ce que l'organe de commande est conçu pour retarder un accès au circuit commun, requis par le second processeur, au cycle de fonctionnement suivant celui pendant lequel le signal d'aiguillage était à son premier niveau, lorsque durant un même cycle de fonctionnement il y a eu un signal de préparation et un appel d'accès de la part du second processeur qui ont été présentés à l'organe de commande.

**3.** Dispositif selon la revendication 1 ou 2, caractérisé en ce qu'il est prévu un ensemble de registres (42, 44) et d'amplificateurs (46) à trois états pour prendre en charge des données provenant du circuit commun et pour les restituer au second processeur pendant que le signal d'aiguillage se trouve à son premier niveau.

**4.** Organe de commande à utiliser dans un dispositif selon l'une quelconque des revendications précédentes, caractérisé en ce que cet organe de commande est conçu pour porter le signal d'aiguillage à son premier niveau lors du cycle de fonctionnement suivant la réception du signal de préparation et pour le maintenir à ce niveau pendant une durée d'accès au plus égale à un cycle de fonctionnement rapide et pour rendre le circuit commun accessible au second processeur lorsque le signal d'aiguillage est à son second niveau.

**Claims**

**1.** A data processing device, comprising a first data processor (1) which is called a priority processor and which operates with fast operating cycles, a second data processor (20) which operates with slow operating cycles, and a common circuit (30) having at least a memory function and being connected to the first and the second processor via a switching circuit (40) which is controlled by a switching signal (DSPE) from a control member (60) which controls the switching signal either to a first level in order to connect the common circuit to the first processor (1), or to a second level in order to connect the common circuit to the second processor (20), as a function of a preparation signal (DSSN) which is generated by the first processor before the fast operating cycle where the access is requested, characterized in that the control member (60) is conceived to control the switching signal (DSPE) to its first level during the operating cycle succeeding the reception of the preparation signal, to maintain it at this level during an access period which is at the most equal to one fast operating cycle, and to control it to the second level at least during the subsequent cycle.

**2.** A device as claimed in Claim 1, characterized in that the control member is conceived to delay an access to the common circuit, requested by the second processor, to the operating cycle succeeding that during which the switching signal was at its first level when during a same operating cycle there have been a preparation signal and an access request from the second processor which have been presented to the control member.

**3.** A device as claimed in Claim 1 or 2, characterized in that there is provided an assembly of registers (42, 44) and three-state amplifiers (46) in order to take control of the data coming from the common circuit and to feed this data to the second processor while the switching signal is at its first level.

4. A control member for use in a device as claimed in any one of the preceding Claims, characterized in that the control member is conceived to control the switching signal to its first level during the operating cycle succeeding the reception of the preparation signal, to maintain it at this level during an access period which is at the most equal to one fast operating cycle, and to make the common circuit accessible to the second processor when the switching signal is at its second level.

**Patentansprüche**

1. Datenverarbeitungsanordnung mit einem ersten Informationsverarbeitungsprozessor (1), der bevorzugt genannt wird und nach Schnellarbeitszyklen arbeitet, mit einem zweiten Signalverarbeitungsprozessor (20), der nach Langsamarbeitszyklen arbeitet, und mit einer gemeinsamen Schaltung (30), die wenigstens eine Speicherbetriebsart enthält und mit dem ersten und dem zweiten Prozessor über ein Umschaltnetzwerk (40) verbunden ist, das durch ein Umschaltsignal (DSPE) aus einem Steuerelement (60) gesteuert wird, wobei dieses Steuerelement das Umschaltsignal auf einem ersten Pegel führt, um eine Verbindung zwischen der gemeinsamen Schaltung und dem ersten Prozessor (1) herzustellen, und auf einem zweiten Pegel führt, um eine Verbindung zwischen der gemeinsamen Schaltung und dem zweiten Prozessor (20) herzustellen, wobei der Pegel von einem Vorbereitungssignal (DSSN) abhängig ist, das vor dem Schnellarbeitszyklus vom ersten Prozessor erzeugt wird, in dem der Zugriff angefragt wird, dadurch gekennzeichnet, daß die Steuereinheit (60) vorgesehen ist, um nach dem Empfang des Vorbereitungssignals das Umschaltsignal während des Betriebszyklus auf seinen ersten Pegel zu bringen, es für eine Zugriffsdauer höchstens gleich eines Schnellarbeitszyklus auf diesem Pegel zu halten und es wenigstens für die Dauer des folgenden Zyklus auf dem zweiten Pegel zu halten.

2. Anordnung nach Anspruch 1, dadurch gekennzeichnet, daß die Steuereinheit zum Verzögern eines vom zweiten Prozessor angefragten Zugriffs in die gemeinsame Schaltung bis zum Arbeitszyklus nach dem Zyklus vorgesehen ist, in dem das Umschaltsignal sich auf seinem ersten Pegel befand, wenn in einem selben Arbeitszyklus ein Vorbereitungssignal und eine Zugriffsanfrage vom zweiten Prozessor vorlag, die der Steuereinheit zugeführt wurden.

3. Anordnung nach Anspruch 1 oder 2, dadurch gekennzeichnet, daß eine Gruppe von Registern (42, 44) und Dreizustandsverstärkern (46) vorgesehen ist, um die Daten aus der gemeinsamen Schaltung aufzunehmen und dem zweiten Prozessor zurückzugeben, während das Umschaltsignal sich auf seinem ersten Pegel befindet.

4. Steuereinheit zur Verwendung in einer Anordnung nach einem oder mehreren der vorangehenden Ansprüche, dadurch gekennzeichnet, daß die Steuereinheit dazu ausgelegt ist, während des Betriebszyklus nach dem Empfang des Vorbereitungssignals das Umschaltsignal auf seinen ersten Pegel zu bringen, für die Dauer des Zugriffs höchstens gleich einem Schnellarbeitszyklus auf diesem Pegel zu halten und die gemeinsame Schaltung für den zweiten Prozessor zugriffsbereit zu halten, wenn das Umschaltsignal auf seinem zweiten Pegel ist.

EP 0 280 369 B1

FIG.1

# FIG. 2

# FIG. 3

# FIG. 4

# FIG.5